# EUROPÄISCHE PATENTANMELDUNG

(11) **EP 2 623 946 A2**
(43) Veröffentlichungstag der Anmeldung: **07.08.2013**
(21) Anmeldenummer: 13150391.4
(22) Anmeldetag: 07.01.2013
(51) Int. Cl.: G01M 1/36

(54) **Vorrichtung und Verfahren zum Auswuchten von Rotoren**

(30) Priorität: 31.01.2012 DE 102012100782
(71) Anmelder: Hofmann Mess- und Auswuchttechnik GmbH & Co. KG, 64319 Pfungstadt (DE)
(72) Erfinder: Fischer, Georg, 64319 Pfungstadt (DE)
(74) Vertreter: Kirschner, Klaus Dieter

(57) **Zusammenfassung**

Die Erfindung betrifft eine Vorrichtung zum Auswuchten von Rotoren, die drehbar in einer Wuchtmaschine oder an einer Werkzeugmaschine gelagert und anzutreiben sind, wobei die Vorrichtung für jede Wuchtebene einen Wuchtring aufweist, der jeweils eine definierte Unwucht hat und gegenüber dem Rotor in seiner Winkellage verstellbar ist. Die Erfindung zeichnet sich dadurch aus, dass der Wuchtring an seinem Umfang je eine hinterschnittene Umfangsnut zur verstellbaren Aufnahme von wenigstens zwei Schiebegewichten aufweist, dass die Schiebegewichte spreizbare, federnd miteinander verbundene Schenkel und einen in der Umfangsnut zu verankernden Fuß aufweisen, und dass die Schenkel derart dimensioniert sind, dass die Schiebegewichte im gespreizten Zustand der Schenkel in der Umfangsnut arretiert sind und in einem nicht-gespreizten Zustand in der Umfangsnut entlang dem Umfang der Wuchtringe verstellbar sind. der Auswuchtvorgang erfolgt dadurch, dass die Schiebegewichte in Ausgangspositionen gebracht werden, in denen sich die von ihnen erzeugten Unwucht-Vektoren gegenseitig aufheben oder eine vorgegebene Unwucht erzeugen, dass in an sich bekannter Weise der dann vorhandene Unwucht-Vektor nach Größe und Richtung gemessen wird, dass die Schiebegewichte aus den Ausgangspositionen in Soll-Lagen derart verfahren werden, dass der Unwucht-Vektor kompensiert wird, indem einer der Schiebegewichte ortsfest gehalten wird und die Welle mit dem Rotor gedreht wird, bis die Soll-Lage des Schiebegewichts erreicht ist, die durch die Größe und die Richtung der Unwucht bestimmt worden ist, und indem das Schiebegewicht nach Erreichen der Soll-Lage freigegeben wird, und dass mit dem anderen Schiebegewicht oder den anderen Schiebegewichten ebenso verfahren wird.

## Beschreibung

Die Erfindung bezieht sich auf eine Vorrichtung und ein Verfahren zum Auswuchten von Rotoren, die drehbar in einer Wuchtmaschine oder an einer Werkzeugmaschine gelagert und anzutreiben sind, wobei jede Vorrichtung wenigstens zwei Schiebegewichte aufweist, die jeweils eine definierte Unwucht haben und gegenüber dem Rotor in ihrer Winkellage verstellbar sind.

Aus DE 197 43 578 A1 ist ein Verfahren zum Auswuchten eines Rotationskörpers bekannt, bei dem eine gezielte Auswuchtung durchgeführt wird. Dazu ist das Verfahren dadurch gekennzeichnet, dass die Kompensationsmassen in ihre Nullpositionen gebracht werden, in denen sich die von ihnen erzeugten Unwucht-Vektoren gegenseitig aufheben, dass in an sich bekannter Weise der dann vorhandene Unwucht-Vektor nach Größe und Richtung gemessen wird, dass wenigstens eine der Kompensationsmassen um einen beliebigen Winkel von der Rotationsachse verstellt wird, wobei eine zusätzliche Unwucht mit einem Kalibrierungs-Unwucht-Vektor erzeugt wird. Der Winkel wird erfasst, in an sich bekannter Weise wird der dann vorhandene Gesamt-Unwucht-Vektor nach Größe und Richtung gemessen, aus dem Unwucht-Vektor und dem Gesamt-Unwucht-Vektor wird der Kalibrierungs-Unwucht-Vektor berechnet, wobei das System aus Wuchtapparat und Rotationskörper kalibriert ist, und die Kompensationsmassen werden aus den Nullpositionen derart verfahren werden, dass der Unwucht-Vektor V kompensiert wird.

Aus DE 199 20 699 A1 ist eine Auswuchteinrichtung zum Auswuchten von Rotoren bekannt, wobei die Rotoren drehbar in einer Wuchtmaschine oder an einer Werkzeugmaschine gelagert und anzutreiben sind. Die Auswuchteinrichtung hat wenigstens zwei Wuchtringe, die jeweils eine definierte Unwucht aufweisen und Befestigungsmittel umfassen, um die Wuchtringe in einer entsprechenden Winkellage zueinander und zu der Unwucht des Rotors an dem Rotor oder an einem Grundkörper, der den Rotor aufnimmt, zu befestigen. Die Befestigungsmittel sind durch Drehen der Arretierungsringe unter Krafteinwirkung gegenüber dem Rotor oder dem Grundkörper lösbar und nach Beendigung der Krafteinwirkung selbsttätig arretierbar. Sperreinrichtungen sind an der Wuchtmaschine oder der Werkzeugmaschine vorgesehen, die jeweils an dem Außenumfang des jeweiligen Wuchtringes angreifen und den jeweiligen Wuchtring gegenüber einer Verdrehung gegenüber der Wuchtmaschine oder der Werkzeugmaschine sperren. Eine Prozesssteuereinrichtung steuert die Sperreinrichtungen und die Drehung der Wuchtmaschinenspindel in Abhängigkeit von den von der Wuchtmaschine ermittelten Unwucht nach Größe und Richtung. einer der Wuchtringe durch die Sperreinrichtung gesperrt wird, dass die Welle mit dem Rotor oder Grundkörper gedreht wird, bis die Soll-Lage des Arretierungsringes erreicht ist, in die durch die Größe und die Richtung der Unwucht bestimmt worden ist, dass der eine Wuchtring freigegeben wird, und dass mit dem anderen Wuchtring ebenso verfahren wird.

Der Erfindung liegt die Aufgabe zugrunde, eine Vorrichtung und ein Verfahren zum Auswuchten von Rotoren bereitzustellen, bei dem eine gezielte, manuelle oder automatische Auswuchtung des Rotors mit einfachen und betriebssicheren Mitteln durchgeführt werden kann.

Dazu ist die erfindungsgemäße Vorrichtung zum Auswuchten von Rotoren der oben genannten Art dadurch gekennzeichnet, dass die Wuchtringe an ihrem Umfang je eine hinterschnittene Umfangsnut zur verstellbaren Aufnahme von Schiebegewichten aufweist, und dass die Schiebegewichte spreizbare, federnd miteinander verbundene Schenkel und einen in der Umfangsnut zu verankernden Fuß aufweisen, und dass die Schenkel derart dimensioniert sind, dass die Schiebegewichte im gespreizten Zustand der Schenkel in der Umfangsnut arretiert sind und in einem nicht-gespreizten Zustand in der Umfangsnut entlang dem Umfang der Wuchtringe verstellbar sind. Bei einer einfachen mechanischen Ausführung der Vorrichtung ist sie geeignet, Rotoren in einer oder mehreren Ebenen manuell oder vollautomatisch auszuwuchten. Die Schiebegewichte sind in dem Wuchtring unverlierbar eingebracht, sodass sie auch unter der Wirkung von Fliehkräften infolge der Rotation nicht wegfliegen können. Die Schiebegewichte sind geschlitzt und werden durch die Eigenspannung in den Wuchtringen verklemmt. Durch intelligentes Verschieben dieser Schiebegewichte kann der Rotor in einer oder mehreren Ebenen ausgewuchtet werden. Dabei eignet sich die Vorrichtung zum automatischen Auswuchten des Rotors.

Eine vorteilhafte Ausgestaltung der erfindungsgemäßen Vorrichtung ist dadurch gekennzeichnet, dass die Schenkel der Schiebegewichte einstückig miteinander ausgeführt sind und einen radial zu dem Wuchtring verlaufenden Schlitz umfassen. Durch die einstückige Ausführung der Schenkel der Schiebegewichte wird die Montage der Schiebegewichte an dem jeweiligen Wuchtring erleichtert.

Eine weitere vorteilhafte Ausgestaltung der erfindungsgemäßen Vorrichtung ist dadurch gekennzeichnet, dass die Schenkel der Schiebegewichte zweiteilig ausgeführt sind, und dass eine Feder in einem radial zu dem Wuchtring verlaufenden, durch die Schenkel gebildeten Schlitz vorgesehen ist. Dadurch wird die Wahl des Materials für die Schiebegewichte unabhängig von den Federeigenschaften des Materials. Dadurch können die Schiebegewichte kostengünstiger hergestellt werden.

Eine weitere vorteilhafte Ausgestaltung der erfindungsgemäßen Vorrichtung ist dadurch gekennzeichnet, dass die Wuchtringe zweiteilig mit einem Basisring und einem an dem Basisring befestigten, mit diesem die Umfangsnut bildenden Zusatzring ausgebildet ist. Dadurch wird die Montage der Schiebegewichte an den Wuchtringen erleichtert.

Eine weitere vorteilhafte Ausgestaltung der erfindungsgemäßen Vorrichtung ist dadurch gekennzeichnet, dass der Basisring und der Zusatzring jeweils einen axial zu dem Wuchtring verlaufenden und radial zu dem Wuchtring außen liegenden Vorsprung aufweisen, wobei die Vorsprünge im montierten Zustand des Wuchtrings einander zugekehrt sind und die Hinterschneidung der Umfangsnut bilden. Dadurch wird in vorteilhafter Weise erreicht, dass die Verankerung der Schiebegewichte an den Wuchtringen mit einfachen mechanischen Mitteln hergestellt werden kann.

Eine vorteilhafte Ausgestaltung der erfindungsgemäßen Vorrichtung ist dadurch gekennzeichnet, dass wenigstens zwei, vorzugsweise drei Schiebegewichte an einem Wuchtring angebracht sind. Dadurch wird in einfacher Weise das Auswuchten des Rotors in zwei Ebenen ermöglicht.

Eine weitere vorteilhafte Ausgestaltung der erfindungsgemäßen Vorrichtung ist dadurch gekennzeichnet, dass Betätigungseinrichtungen vorgesehen sind, die jeweils zum Erfassen und Zusammendrücken der Schenkel der Schiebegewichte ausgelegt sind. Durch die Betätigungseinrichtungen kann der Auswuchtvorgang ohne weitere mechanische Mittel durchgeführt werden.

Eine weitere vorteilhafte Ausgestaltung der erfindungsgemäßen Vorrichtung ist dadurch gekennzeichnet, dass eine Prozesssteuereinrichtung vorgesehen ist, die die Betätigungseinrichtung und die Drehung des Rotors durch die Vorrichtung in Abhängigkeit von der ermittelten Unwucht nach Größe und Richtung steuert. Durch die Prozesssteuerung kann das Auswuchten des Rotors automatisiert werden.

Die Aufgabe wird auch gelöst durch ein Verfahren zum Auswuchten von Rotoren, insbesondere von walzenförmigen Rotoren oder von Werkzeugen und Werkzeughaltern, die drehbar an einer Wuchtmaschine oder in einer Werkzeugmaschine gelagert und angetrieben werden, wobei wenigstens zwei Wuchtringe verwendet werden, die jeweils eine definierte Unwucht aufweisen, wobei die Wuchtringe an ihrem Umfang je eine hinterschnittene Umfangsnut zur umfangsmäßig verstellbaren Aufnahme von Schiebegewichten aufweisen, und die Schiebegewichte spreizbare, federnd miteinander verbundene Schenkel aufweisen, die derart dimensioniert sind, dass die Schiebegewichte im gespreizten Zustand der Schenkel in der Umfangsnut arretiert sind und in einem nicht-gespreizten Zustand entlang dem Umfang der Wuchtringe verstellbar sind, das dadurch gekennzeichnet ist, dass die Schiebegewichte in ihre Nullpositionen gebracht werden, in denen sich die von ihnen erzeugten Unwucht-Vektoren gegenseitig aufheben, dass in an sich bekannter Weise der dann vorhandene Unwucht-Vektor nach Größe und Richtung gemessen wird, dass die Schiebegewichte aus den Nullpositionen in eine Soll-Lage derart verfahren werden, dass der Unwucht-Vektor kompensiert wird, indem die Schiebegewichte ortsfest gehalten werden und die Welle mit dem Rotor gedreht wird, bis die Soll-Lage des Schiebegewichts erreicht ist, die durch die Größe und die Richtung der Unwucht bestimmt worden ist, und indem das Schiebegewicht freigegeben wird, und dass mit den anderen Schiebegewichten bzw. dem anderen Wuchtring ebenso verfahren wird. Dieses Verfahren eignet sich in besonders vorteilhafter Weise für die automatische Durchführung des Auswuchtvorgangs.

Eine vorteilhafte Ausgestaltung des erfindungsgemäßen Verfahrens ist dadurch gekennzeichnet, dass die Ausgangspositionen die Nullpositionen sind, in denen sich die von ihnen erzeugten Unwucht-Vektoren gegenseitig aufheben. Der Vorteil besteht darin, dass sich durch einfaches Verstellen der Schiebegewichte die Null-Positionen eingestellt werden können.

Eine weitere vorteilhafte Ausgestaltung des erfindungsgemäßen Verfahrens ist dadurch gekennzeichnet, dass die Ausgangspositionen solche Positionen sind, in denen die von ihnen erzeugten Unwucht-Vektoren eine Vorgabeunwucht erzeugen. Ein besondere Fall ist das Auswuchten von unsymmetrische Rotoren, beispielsweise von unsymmetrische Kurbelwellen. So hat beispielsweise eine 3-Zylinder oder V6-Kurbelwelle ein sehr großes freies Unwuchtmoment. Dieses Moment ist so groß, dass der Messbereich des in der Wuchtmaschine vorhandenen, mechanischen Unwuchtschwingers überschritten wird, sodass die Unwucht dieser unsymmetrischen Kurbelwellen nicht ohne ein mitlaufendes Kompensationsmoment direkt gemessen werden kann. Das Kompensationsmoment wird dann als Gegenmaßnahme am Antriebsmotor beziehungsweise an der Antriebspindel aufgebracht, das dann synchron mitläuft und ein gleich großes Unwuchtmoment mit entgegengesetzt wirkendem Unwucht-Vektor hat. Dieses mitlaufende Unwuchtmoment wird exakt auf die Soll-Unwucht der Kurbelwelle mit einer Kalibrierwelle abgestimmt, sodass das mechanische Antriebssystem des Wuchtsystems durch den Einsatz von eine oder zwei Wuchtring(e) mit einer gezielten Vorhalteunwucht auf nahezu Null kompensiert wird. Wird dann eine Produktions-Kurbelwelle auf einem derart abgestimmten System auf Unwucht vermessen, muss das Gesamtsystem "Null" ergeben, damit die Produktions-Kurbelwelle später genau der Sollunwucht entspricht. Dies ist in vorteilhafter Weise dadurch möglich, dass das Antriebsystem mit zwei Wuchtringen bestückt wird, um somit eine bestimmte Vorhalteunwucht gezielt zu erzeugen. Der Vorteil besteht nun darin, dass sich durch einfaches Verstellen der Schiebegewichte jedes beliebige Vorhaltemoment erzeugen lässt.

Eine weitere vorteilhafte Ausgestaltung des erfindungsgemäßen Verfahrens ist dadurch gekennzeichnet, dass die Schiebegewichte unter Drehung des Rotors durch eine Betätigungseinrichtung ortsfest gehalten werden, dass die Schenkel der Schiebegewichte jeweils erfasst und zusammengedrückt werden. Dadurch wird die Verstellung der Schiebegewichte an dem jeweiligen Wuchtring einfach gestaltet.

Eine weitere vorteilhafte Ausgestaltung des erfindungsgemäßen Verfahrens ist dadurch gekennzeichnet, dass die Betätigungseinrichtung und die Drehung des Rotors in Abhängigkeit von der ermittelten Unwucht nach Größe und Richtung durch eine Prozesssteuereinrichtung gesteuert werden, so dass die Verstellung der Schiebegewichte automatisch durchgeführt werden kann.

Das Verfahren und die Vorrichtung können für Rotoren mit 1-Ebenen-Ausgleich angewendet werden, wobei nur ein Wuchtring erforderlich ist, wie es typischerweise für Werkzeughalter der Fall ist. Das Verfahren und die Vorrichtung können auch für Rotoren mit 2- oder Mehr-Ebenen-Ausgleich angewendet werden, wobei für jede auszugleichende Unwuchtebene ein Wuchtring erforderlich ist, wie es typischerweise für walzenförmige Rotoren wie beispielsweise Druckwalzen, Elektroläufer und dergleichen der Fall ist.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:
- Fig. 1: eine schematische Darstellung eines Rotors mit zwei Wuchtringen;
- Fig. 2: eine Seitenansicht eines Wuchtringes mit einem Schiebegewicht;
- Fig. 3: einen Schnitt durch den Wuchtring von Fig. 2 entlang der Linie B-B;
- Fig. 4: eine schematische Seitenansicht eines Wuchtrings mit drei Schiebegewichten, und
- Fig. 5: einen vergrößerten Teil des Wuchtrings nach Fig. 4.

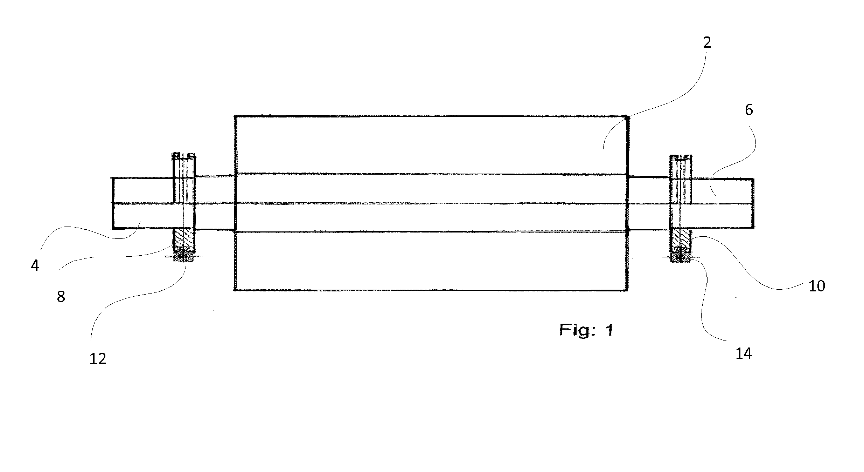

Fig. 1 zeigt eine schematische Seitenansicht eines Rotors 2 mit Achszapfen 4, 6 und zwei Wuchtringen 8, 10, die auf den Achszapfen 4, 6 respektive befestigt sind, um den Rotor2 in zwei Ebenen auszuwuchten. Die Wuchtringe 8, 10 tragen jeweils mindestens zwei Schiebegewichte 12 bzw. 14, von denen jeweils ein Schiebegewicht in Fig. 1 dargestellt ist.

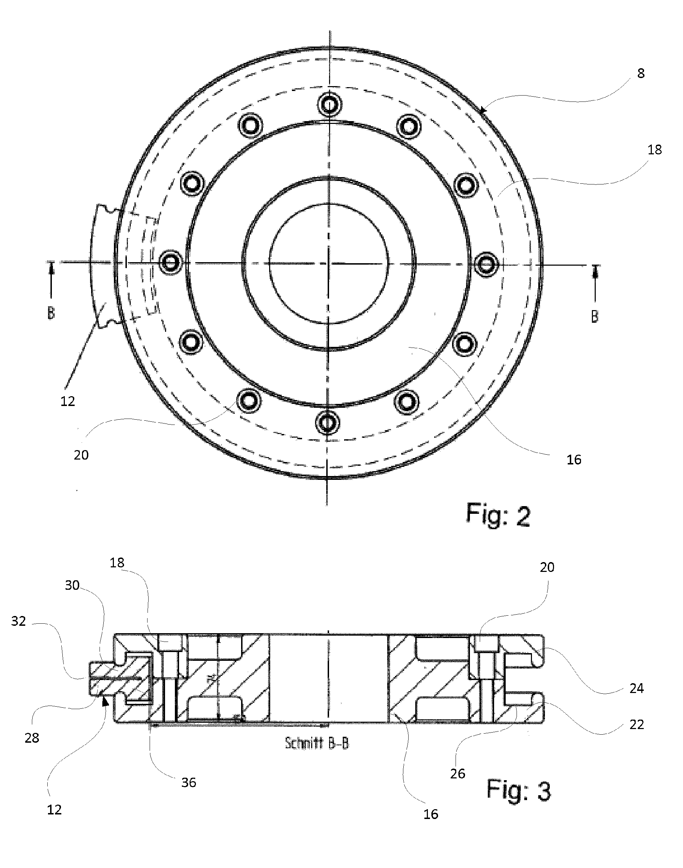

Fig. 2 zeigt eine Seitenansicht des Wuchtrings 8, an dem zum Zweck der vereinfachten Darstellung nur ein Schiebegewicht 12 gezeigt ist. Der Wuchtring 8 ist zweiteilig ausgeführt und umfasst einen Basisring 16 und einen Zusatzring 18, die mit Schrauben 20 miteinander verschraubt sind, wie deutlich in dem Schnitt von Fig. 3 zu erkennen ist.

Wie in Fig. 3 gezeigt ist, weisen der Basisring 16 und der Zusatzring 18 jeweils einen axial zu dem Wuchtring 8 verlaufenden und radial zu dem Wuchtring 8 außen liegenden Vorsprung 22 bzw. 24 auf, wobei die Vorsprünge 22, 24 im montierten Zustand des Wuchtrings einander zugekehrt sind und die Hinterschneidung einer Umfangsnut 26 bilden, die im Umfang des jeweiligen Wuchtrings 8 angeordnet ist und zur verstellbaren Aufnahme von Schiebegewichten 12 dient. Gemäß Fig. 3 weist das Schiebegewicht 12 spreizbare, federnd miteinander verbundene Schenkel 28, 30 auf, die einstückig miteinander ausgeführt sind und einen radial zu dem Wuchtring verlaufenden Schlitz 32 umfassen. Die Schenkel 28, 30 sind so dimensioniert, dass das Schiebegewicht 12 im gespreizten Zustand der Schenkel 28, 30 in der Umfangsnut 26 arretiert sind und in einem nicht gespreizten Zustand in der Umfangsnut 26 entlang dem Umfang des Wuchtrings 8 verstellbar ist. Das Schiebegewicht 12 hat einen Fuß 36, mit dem es in der Umfangsnut 26 zu verankern ist.

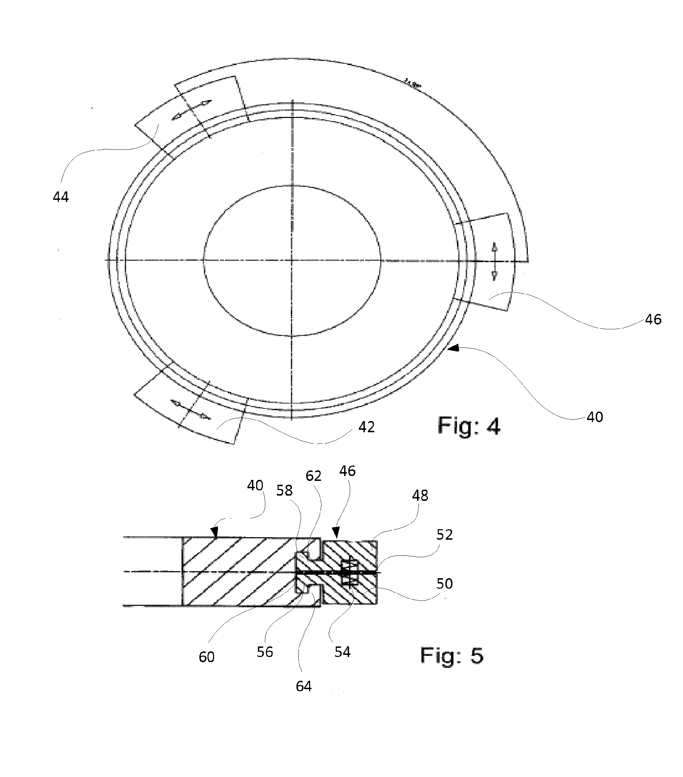

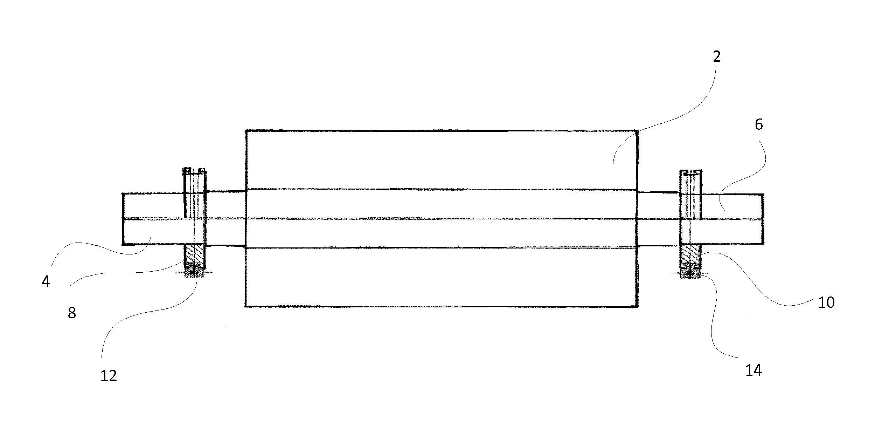

Fig. 4 zeigt eine schematische Seitenansicht eines anderen Ausführungsbeispiels eines Wuchtrings 40 mit drei Schiebegewichten 42, 44, 46. Wie in Fig. 5 gezeigt ist, weist das Schiebegewicht 46 zwei Schenkel 48, 50 auf, die einen radial zu dem Wuchtring 40 verlaufenden Schlitz 52 bilden und damit zweiteilig ausgeführt sind. Zwischen den Schenkeln 48, 50 ist eine axial zu dem Wuchtring 40 wirkende Feder 54 vorgesehen, die die beiden Schenkel 48, 50 auseinander drückt und damit für eine Verspannung des Schiebegewichts 46 an dem Wuchtring 40 sorg. Die Schenkel 48, 50 sind wiederum über Fußansätze 56, 58 in einer hinterschnittenen Nut 60 in dem Wuchtring 40 verankert.

Mit den anhand der Figuren 1 bis 5 beschriebenen Komponenten wird eine Vorrichtung zum Auswuchten von Rotoren geschaffen, die drehbar an einer Wuchtmaschine oder einer Werkzeugmaschine gelagert und anzutreiben sind, wobei die Vorrichtung wenigstens zwei Wuchtringe aufweist, die jeweils eine definierte Unwucht haben und gegenüber dem Rotor in ihrer Winkellage verstellbar sind. Mit einer derartigen Vorrichtung können Rotoren wie folgt ausgewuchtet werden.

Wenn es sich um symmetrische Rotoren handelt, werden die Schiebegewichte 42, 44, 46 zunächst in ihre Null-Position gebracht, siehe Fig. 4, in denen sich die von ihnen erzeugten Unwucht-Vektoren gegenseitig aufheben. Sodann wird in an sich bekannter Weise der dann vorhandene Unwucht-Vektor nach Größe und Richtung gemessen. Die Schiebegewichte 42, 44, 46 werden dann aus den Null-Positionen in einem Soll-Lageverfahren derart verfahren werden, dass der Unwucht-Vektor kompensiert wird. Der letztere Verfahrensschritt wird dadurch ausgeführt, dass die Schiebegewichte 42, 44, 46 jeweils ortsfest gehalten werden und die Welle mit dem Rotor gedreht wird, bis die Soll-Lage des Schiebegewichts 42, 44, 46 erreicht ist, die durch die Größe und die Richtung der Unwucht bestimmt worden ist, und sodann wird das jeweilige Schiebegewicht wieder freigegeben. Dasselbe Verfahren wird dann mit den anderen Schiebegewichten bzw. dem anderen Wuchtring ebenso durchgeführt. Die Schiebegewichte 42, 44, 46 werden unter Drehung des Rotors dadurch ortsfest gehalten, dass die Schenkel 48, 50 der Schiebegewichte erfasst und zusammengedrückt werden. Die Drehung des Rotors in Abhängigkeit von der ermittelten Unwucht nach Größe und Richtung wird durch eine Prozesssteuereinrichtung gesteuert.

Wen es sich um unsymmetrische Rotoren handelt, erfolgt der Wuchtvorgang dadurch, dass die Schiebegewichte (12, 14; 42, 44, 46) in Ausgangspositionen gebracht werden, in denen sie eine Vorgabeunwucht erzeugen, dass in an sich bekannter Weise der dann vorhandene Unwucht-Vektor nach Größe und Richtung gemessen wird, dass die Schiebegewichte (12, 14; 42, 44, 46) aus den Ausgangspositionen in Soll-Lagen derart verfahren werden, dass der Unwucht-Vektor kompensiert wird, indem eines der Schiebegewichte (12, 14; 42, 44, 46) ortsfest gehalten wird und die Welle mit dem Rotor gedreht wird, bis die Soll-Lage des Schiebegewichts erreicht ist, die durch die Größe und die Richtung der Unwucht bestimmt worden ist, und indem das Schiebegewicht nach Erreichen der Soll-Lage freigegeben wird, und dass mit dem anderen Schiebegewicht (12, 14; 42, 44, 46) oder den anderen Schiebegewichten (12, 14; 42, 44, 46) ebenso verfahren wird.

Bei einer Vorrichtung nach Fig. 1 mit zwei Wuchtringen 40 gemäß Fig. 4, die jeweils drei Schiebegewichte 42, 44, 46 aufweisen, erfolgt insbesondere das Auswuchten in zwei Ebenen wie folgt. Der erste Messlauf erfolgt mit neutraler Winkelstellung der drei Schiebegewichte, bei der alle Schiebegewichte 42, 44, 46 vorab "neutral" unter 120-Grad positioniert sind. Nach dem ersten Messlauf werden auf Basis der gemessenen Unwucht, die neuen Winkelpositionen der drei Schiebegewichte je Ausgleichsebene vom Unwucht-Messgerät berechnet. Jedes einzelne Schiebegewicht 42, 44, 46 kann nun vollautomatisch auf die jeweils neu berechneten Winkelpositionen verschoben werden. Der auszuwuchtende Rotor 2 kann über den Servo-Antrieb der Wuchtmaschine in jeder beliebigen Winkellage positioniert werden. Das erste Schiebegewicht 42 wird nun unter die Betätigungsvorrichtung gefahren. Dieses Schiebegewicht 42 wird dann mittels der Betätigungsvorrichtung, die beispielsweise eine hydraulisch oder pneumatisch zu aktivierende Spannbacke aufweist, zusammengedrückt und dadurch im Wuchtring 40 entspannt. Nun wird der Rotor 2 auf die entsprechende Winkellage verdreht, wobei das Schiebegewicht 42 jedoch in der Betätigungsvorrichtung gehalten wird. Nach Erreichen der entsprechenden Winkellage wird das Schiebegewicht 42 wieder losgelassen, und damit wird das Schiebegewicht 42 wieder im Wuchtring 40 gespannt. Analog dazu werden alle Schiebegewichte 42, 44, 46 auf ihre berechneten Winkelpositionen gebracht.

### Bezugszeichenliste

- 2: Rotor
- 4: Achszapfen
- 6: Achszapfen
- 8: Wuchtring
- 10: Wuchtring
- 12: Schiebegewicht
- 14: Schiebegewicht
- 16: Basisring
- 18: Zusatzring
- 20: Schrauben
- 22: Vorsprung
- 24: Vorsprung
- 26: Umfangsnut
- 28: Schenkel
- 30: Schenkel
- 32: Schlitz
- 36: Fuß
- 40: Wuchtring
- 42: Schiebegewicht
- 44: Schiebegewicht
- 46: Schiebegewicht
- 48: Schenkel
- 50: Schenkel
- 52: Schlitz
- 56: Fußansatz
- 58: Fußansatz
- 60: Nut
- 62: Vorsprung
- 64: Vorsprung

## Patentansprüche

1. Vorrichtung zum Auswuchten von Rotoren, die drehbar in einer Wuchtmaschine oder an einer Werkzeugmaschine gelagert und anzutreiben sind, wobei die Vorrichtung für jede Wuchtebene einen Wuchtring (8, 10; 40) aufweist, der jeweils eine definierte Unwucht hat und gegenüber dem Rotor (2) in seiner Winkellage verstellbar ist,
**dadurch gekennzeichnet, dass**
der Wuchtring (8, 10; 40) an seinem Umfang je eine hinterschnittene Umfangsnut (26; 60) zur verstellbaren Aufnahme von wenigstens zwei Schiebegewichten (12, 14; 42, 44, 46) aufweist, dass
die Schiebegewichte (12, 14; 42, 44, 46) spreizbare, federnd miteinander verbundene Schenkel (28, 30; 48, 50) und einen in der Umfangsnut (26; 60) zu verankernden Fuß (36; 56, 58) aufweisen, und dass
die Schenkel (28, 30; 48, 50) derart dimensioniert sind, dass die Schiebegewichte (12, 14; 42, 44, 46) im gespreizten Zustand der Schenkel (28, 30; 48, 50) in der Umfangsnut (26; 60) arretiert sind und in einem nicht-gespreizten Zustand in der Umfangsnut (26; 60) entlang dem Umfang der Wuchtringe (8, 10; 40) verstellbar sind.

2. Vorrichtung nach Anspruch 1, **dadurch gekennzeichnet, dass** die Schenkel (28, 30) der Schiebegewichte (12, 14) einstückig miteinander ausgeführt sind und einen radial zu dem Wuchtring (8, 10; 40) verlaufenden Schlitz (32)umfassen.

3. Vorrichtung nach Anspruch 1, **dadurch gekennzeichnet, dass** die Schenkel (48, 50) der Schiebegewichte (44, 46) zweiteilig ausgeführt sind, und dass eine Feder in einem radial zu dem Wuchtring (8, 10; 40) verlaufenden, durch die Schenkel (48, 50) gebildeten Schlitz (52) vorgesehen ist.

4. Vorrichtung nach Anspruch 1, **dadurch gekennzeichnet, dass** der Wuchtring (8, 10; 40) zweiteilig mit einem Basisring (16) und einem an dem Basisring (16) befestigten, mit diesem die Umfangsnut (26; 60) bildenden Zusatzring (18) ausgebildet ist.

5. Vorrichtung nach Anspruch 4, **dadurch gekennzeichnet, dass** der Basisring (16) und der Zusatzring (18) jeweils einen axial zu dem Wuchtring (8, 10; 40) verlaufenden und radial zu dem Wuchtring (8, 10; 40) außen liegenden Vorsprung (20, 22; 62, 64) aufweisen, wobei die Vorsprünge (20, 22; 62, 64) im montierten Zustand des Wuchtrings (8, 10; 40) einander zugekehrt sind und die Hinterschneidung der Umfangsnut (26; 60) bilden.

6. Vorrichtung nach einem der vorhergehenden Ansprüche, **dadurch gekennzeichnet, dass** drei Schiebegewichte (12, 14; 42, 44, 46) an einem Wuchtring (8, 10; 40) angebracht sind.

7. Vorrichtung nach einem der vorhergehenden Ansprüche, **dadurch gekennzeichnet, dass** Betätigungseinrichtungen vorgesehen sind, die jeweils zum Erfassen und Zusammendrücken der Schenkel (28, 30; 48, 50)n der Schiebegewichte (12, 14; 42, 44, 46) ausgelegt sind.

8. Vorrichtung nach einem der vorhergehenden Ansprüche, **dadurch gekennzeichnet, dass** eine Prozesssteuereinrichtung vorgesehen ist, die die Betätigungseinrichtung und die Drehung des Rotors (2) durch die Vorrichtung in Abhängigkeit von der ermittelten Unwucht nach Größe und Richtung steuert.

9. Verfahren zum Auswuchten von Rotoren, die drehbar an einer Wuchtmaschine oder an einer Werkzeugmaschine gelagert und angetrieben werden, wobei für jede Wuchtebene einen Wuchtring (8, 10; 40) verwendet wird, der jeweils eine definierte Unwucht aufweist, wobei der Wuchtring (8, 10; 40) an seinem Umfang je eine hinterschnittene Umfangsnut (26; 60) zur umfangsmäßig verstellbaren Aufnahme von wenigstens zwei Schiebegewichten (12, 14; 42, 44, 46) aufweist, und die Schiebegewichte (12, 14; 42, 44, 46) spreizbare, federnd miteinander verbundene Schenkel (28, 30; 48, 50) aufweisen, die derart dimensioniert sind, dass die Schiebegewichte (12, 14; 42, 44, 46) im gespreizten Zustand der Schenkel (28, 30; 48, 50) in der Umfangsnut (26; 60) arretiert sind und in einem nicht-gespreizten Zustand entlang dem Umfang der Wuchtringe (8, 10; 40) verstellbar sind,
**dadurch gekennzeichnet, dass**
die Schiebegewichte (12, 14; 42, 44, 46) in eine Ausgangspositionen gebracht werden, in denen sich die von ihnen erzeugten Unwucht-Vektoren gegenseitig aufheben oder eine Vorgabeunwucht erzeugen, dass
in an sich bekannter Weise der dann vorhandene Unwucht-Vektor nach Größe und Richtung gemessen wird, dass
die Schiebegewichte (12, 14; 42, 44, 46) aus den Ausgangspositionen in Soll-Lagen derart verfahren werden, dass der Unwucht-Vektor kompensiert wird, indem eines der Schiebegewichte (12, 14; 42, 44, 46) ortsfest gehalten wird und die Welle mit dem Rotor gedreht wird, bis die Soll-Lage des Schiebegewichts erreicht ist, die durch die Größe und die Richtung der Unwucht bestimmt worden ist, und indem
das Schiebegewicht nach Erreichen der Soll-Lage freigegeben wird,
und dass mit dem anderen Schiebegewicht (12, 14; 42, 44, 46) oder den anderen Schiebegewichten (12, 14; 42, 44, 46) ebenso verfahren wird.

10. Verfahren nach Anspruch 9, **dadurch gekennzeichnet, dass** die Ausgangspositionen die Nullpositionen sind, in denen sich die von ihnen erzeugten Unwucht-Vektoren gegenseitig aufheben

11. Verfahren nach Anspruch 9, **dadurch gekennzeichnet, dass** die Ausgangspositionen solche Positionen sind, in denen die von ihnen erzeugten Unwucht-Vektoren eine Vorgabeunwucht erzeugen.

12. Verfahren nach einem der Ansprüche 9 bis 11, **dadurch gekennzeichnet, dass** das Schiebegewicht (12, 14; 42, 44, 46) unter Drehung des Rotors dadurch ortsfest gehalten wird, dass die Schenkel (28, 30; 48, 50) des Schiebegewichts (12, 14; 42, 44, 46) jeweils erfasst und zusammengedrückt werden.

13. Verfahren nach Anspruch 12, **dadurch gekennzeichnet, dass** die Drehung des Rotors in Abhängigkeit von der ermittelten Unwucht nach Größe und Richtung durch eine Prozesssteuereinrichtung gesteuert wird.
